# EUROPEAN PATENT APPLICATION

(11) **EP 4 693 892 A1**
(43) Date of publication of application: **11.02.2026**
(21) Application number: 24793960.6
(22) Date of filing: 06.08.2024
(51) Int. Cl.: H02S 40/10

(54) **CLEANING ROBOT**

(30) Priority: 11.06.2024 CN 202421315389 U
(71) Applicant: Arctech Solar Holding Co., Ltd., Kunshan Suzhou, Jiangsu 215331 (CN)
(72) Inventor: LIU, Haijun, Suzhou, Jiangsu 215331 (CN); YANG, Ying, Suzhou, Jiangsu 215331 (CN); JING, Feixiang, Suzhou, Jiangsu 215331 (CN); ZOU, Jie, Suzhou, Jiangsu 215331 (CN)
(74) Representative: Michalski Hüttermann & Partner Patentanwälte mbB
(86) International application number: PCT/CN2024/110175
(87) International publication number: WO 2025/255928

(57) **Abstract**

A cleaning robot includes a rack, a first traveling wheel, a first driving mechanism for driving the first traveling wheel to rotate, a second traveling wheel, and a second driving mechanism for driving the second traveling wheel to rotate. The cleaning robot further includes a control box and a battery box. The first driving mechanism and the second driving mechanism are both electrically connected to the control box. The control box and the battery box are connected to the rack. The control box is disposed adjacent to one of the first driving mechanism and the second driving mechanism, and the battery box is disposed adjacent to a remaining one of the first driving mechanism and the second driving mechanism. The cleaning robot provided by this application has uniform weight distribution and a stable center of gravity.

## Description

### CROSS-REFERENCE TO RELATED APPLICATION

The present application claims priority of a Chinese Patent Application No. 2024213153894, filed on June 11, 2024 and titled "CLEANING ROBOT", the entire content of which is incorporated herein by reference.

### TECHNICAL FIELD

This application relates to a cleaning robot, which belongs to the field of photovoltaic technology.

### BACKGROUND

Photovoltaic cleaning robots are usually used to clean photovoltaic modules to remove dust on the surfaces of photovoltaic modules. For example, Patent Number CN114472283A discloses a cleaning robot, which includes a main frame, a driving mechanism provided at two ends of the main frame, a roller brush, a first traveling wheel and a second traveling wheel. The driving mechanism at one end of the main frame controls the rotation of the first traveling wheel. The driving mechanism at the other end of the main frame controls the rotation of the second traveling wheel. The driving mechanism controls the rotation of the roller brush, allowing the cleaning robot to clean while moving along the photovoltaic modules. The cleaning robot further includes a control box and a photovoltaic panel. The control box is electrically connected to the driving mechanism. The control box is fixed to one end of the main frame, making this end heavy. The unbalanced weight at two ends of the cleaning robot can easily cause local pressure deformation of the photovoltaic modules. The photovoltaic panel is fixed to the main frame. The photovoltaic panel is used to provide power to the cleaning robot. The way of setting the photovoltaic panel on the top of the main frame makes the overall space occupied by the cleaning robot large.

### SUMMARY

An object of the present application is to provide a cleaning robot with even weight distribution, stable center of gravity and small space occupation.

In order to achieve the above object, the present application adopts the following technical solutions:
a cleaning robot, including:
a rack;
a first traveling wheel;
a second traveling wheel;
a first driving mechanism, the first driving mechanism being configured to drive the first traveling wheel to rotate;
a second driving mechanism, the second driving mechanism being configured to drive the second traveling wheel to rotate; the first driving mechanism and the second driving mechanism being correspondingly arranged at two ends in a length direction of the rack;
a control box, the control box being electrically connected to both the first driving mechanism and the second driving mechanism; and
a battery box, both the battery box and the control box being connected to the rack; the control box being disposed adjacent to one of the first driving mechanism and the second driving mechanism; the battery box being disposed adjacent to a remaining one of the first driving mechanism and the second driving mechanism.

As a technical solution for further improvement of this application, the cleaning robot includes an outer shell connected to the rack; the outer shell includes a first shell, a second shell, a third shell and a fourth shell; the first shell is disposed adjacent to the third shell; the second shell is disposed adjacent to the fourth shell; the first shell covers the first driving mechanism; the second shell covers the second driving mechanism; the third shell covers the control box; and the fourth shell covers the battery box.

As a technical solution for further improvement of this application, the outer shell includes a fifth shell, the fifth shell connects the third shell and the fourth shell; a first height is formed between a top surface of the third shell and a top surface of the rack; a second height is formed between a top surface of the fourth shell and the top surface of the rack; a third height is formed between a top surface of the fifth shell and the top surface of the rack; the first height is equal to the second height, the second height is greater than the third height; an indicator light is provided on the outer shell.

As a technical solution for further improvement of this application, the rack includes a first cross beam and a second cross beam, the first cross beam includes a first cross beam main body and a first extension portion connected to the first cross beam main body; the second cross beam includes a second cross beam main body and a second extension portion connected to the second cross beam main body; the first cross beam main body and the second cross beam main body both have cavities for cables to pass through; the first extension portion and the second extension portion are arranged oppositely.

As a technical solution for further improvement of this application, the rack includes a connecting plate connecting the first cross beam and the second cross beam; the cavity includes a first cavity and a second cavity; a partition plate is provided between the first cavity and the second cavity.

As a technical solution for further improvement of this application, the cleaning robot includes two displacement sensors which are correspondingly arranged on two sides of the rack in a width direction; the displacement sensors are configured to detect a distance between the cleaning robot and a docking station, and determine whether the cleaning robot is parked in place according to the distance which is detected.

As a technical solution for further improvement of this application, two first traveling wheels and two second traveling wheels are provided, respectively; each of the first driving mechanism and the second driving mechanism includes a driving component, a plurality of gears and a gear box; the gear box of the first driving mechanism and the gear box of the second driving mechanism are correspondingly connected to the two ends of the rack in the length direction; the plurality of the gears are disposed in the gear box; the gears are rotatably connected to the gear box; one of the gears is connected to an output shaft of the driving component; a second output end wheel shaft and a third output end wheel shaft are provided in each of the gear box of the first driving mechanism and the gear box of the second driving mechanism; the second output end wheel shaft and the third output end wheel shaft are respectively connected to the two first traveling wheels at a same end or the two second traveling wheels at a same end; the gears engage in meshing transmission to transmit power to rotate the first traveling wheels and the second traveling wheels; at least part of an outer contour of the first traveling wheel and the second traveling wheel is tapered.

As a technical solution for further improvement of this application, each of the first driving mechanism and the second driving mechanism is connected to a positioning structure; the positioning structure includes an L-shaped positioning portion; the positioning portion of the first driving mechanism and the positioning portion of the second driving mechanism are disposed oppositely; an L-shaped reinforcing rib is provided on a side of the positioning portion facing away from the rack; the positioning portion is configured to limit a parking position of the cleaning robot.

As a technical solution for further improvement of this application, the rack further includes a cantilever arm fixed to one end of the first cross beam and the second cross beam; the first driving mechanism is rotationally connected to the cantilever arm; the second driving mechanism is fixed to another end of the first cross beam and the second cross beam.

As a technical solution for further improvement of this application, the cleaning robot includes a roller brush; two ends of the roller brush are connected to a first output end wheel shaft of the first driving mechanism and a first output end wheel shaft of the second driving mechanism; connection holes for connecting with the roller brush are respectively provided on the first output end wheel shafts of the first driving mechanism and the second driving mechanism, and any one of the connection holes is a waist-shaped hole;
the cleaning robot includes a first guiding wheel and a second guiding wheel; the first guiding wheel is connected to the first driving mechanism; and the second guiding wheel is connected to the second driving mechanism.

Compared with the prior art, the beneficial effects of this application are that the battery in the battery box is used to supply power to the first driving mechanism and the second driving mechanism, and the battery box is arranged on the rack, the battery box does not increase the height of the cleaning robot so that the overall structure is more compact and takes up less space. The first driving mechanism and the second driving mechanism are correspondingly arranged at two ends of the rack. The control box and battery box are respectively disposed adjacent to two ends of the rack, so that the weight of the cleaning robot is evenly distributed and the center of gravity is stable. As a result, the cleaning robot is not easy to deflect when moving, which is conducive to uniform stress on the photovoltaic module and avoids local pressure deformation of the photovoltaic module.

### BRIEF DESCRIPTION OF DRAWINGS

FIG. 1 is a perspective schematic view of a cleaning robot in accordance with an embodiment of the present application;
FIG. 2 is a side view of the cleaning robot shown in FIG. 1;
FIG. 3 is an exploded schematic view of FIG. 2;
FIG. 4 is a perspective view of part of the structure in FIG. 1;
FIG. 5 is an enlarged schematic view of area A in FIG. 4;
FIG. 6 is an exploded schematic view of FIG. 4 from another angle;
FIG. 7 is an enlarged schematic view of area B in FIG. 6;
FIG. 8 is a perspective view of FIG. 1 from another angle;
FIG. 9 is an enlarged schematic view of area C in FIG. 8;
FIG. 10 is a perspective view of part of the structure in FIG. 4;
FIG. 11 is an exploded schematic view of FIG. 10;
FIG. 12 is an exploded schematic view of part of the structure in FIG. 10;
FIG. 13 is a side view of a rack in FIG. 10;
FIG. 14 is a perspective view of FIG. 10 from another angle;
FIG. 15 is an exploded schematic view of FIG. 14;
FIG. 16 is a perspective view of a cantilever arm of the cleaning robot in the present application;
FIG. 17 is a front view of the cantilever arm of the cleaning robot in the present application;
FIG. 18 is an exploded schematic view of a gear box and a limiting component in FIG. 12;
FIG. 19 is an enlarged schematic view of area D in FIG. 18;
FIG. 20 is a perspective exploded view from another angle of the first driving mechanism, a swing arm, a bearing and an elastic piece of the cleaning robot in the present application similar to FIG. 12;
FIG. 21 is a front view of the first driving mechanism, the swing arm, the bearing and the elastic piece of the cleaning robot in the present application in a perspective combination state;
FIG. 22 is a cross-sectional view taken along line E-E in FIG. 21;
FIG. 23 is a cross-sectional view of the first driving mechanism; and
FIG. 24 is a cross-sectional view of the second driving mechanism.

### DETAILED DESCRIPTION

Exemplary embodiments of the present application will be described in detail below with reference to the accompanying drawings. If there are several specific embodiments, features of these embodiments may be combined with each other provided there is no conflict. When the description refers to the drawings, the same numbers in different drawings refer to the same or similar elements, unless otherwise stated. The following description of exemplary embodiments does not represent all embodiments consistent with the present application. Rather, they are merely examples of devices, products and/or methods consistent with aspects of the present application as recited in the claims of the present application.

The terminologies used in the present application are only for the purpose of describing specific embodiments, and are not intended to limit the protection scope of the present application. The singular forms "a", "said", and "the" used in the specification and claims of the present application are also intended to include plural forms unless the context clearly indicates other meanings.

It should be understood that the terms "first", "second" and similar words used in the specification and claims of the present application do not represent any order, quantity or importance, but are only used to distinguish different components. Similarly, "an" or "a" and other similar words do not mean a quantity limit, but mean that there is at least one. Unless otherwise noted, "front", "rear", "top", "bottom" and similar words are for ease of description only and are not limited to one location or one spatial orientation. Similar words such as "include" or "comprise" mean that elements or objects appear before "include" or "comprise" cover elements or objects listed after "include" or "comprise" and their equivalents, and do not exclude other elements or objects. The term "a plurality of" mentioned in the present disclosure includes two or more.

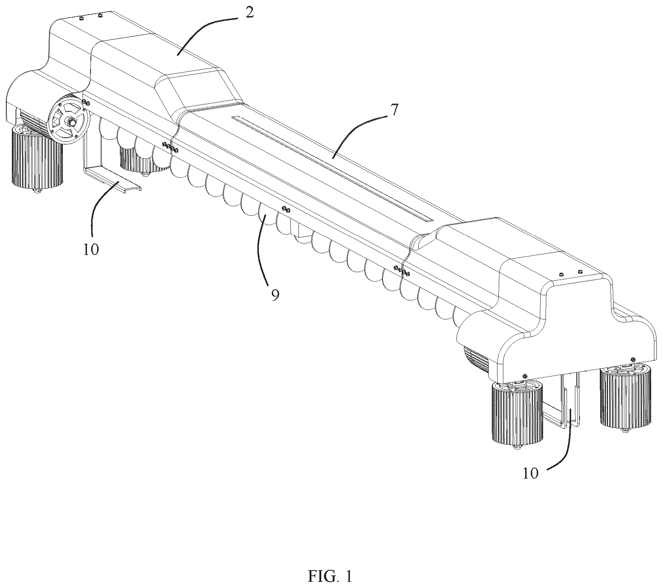

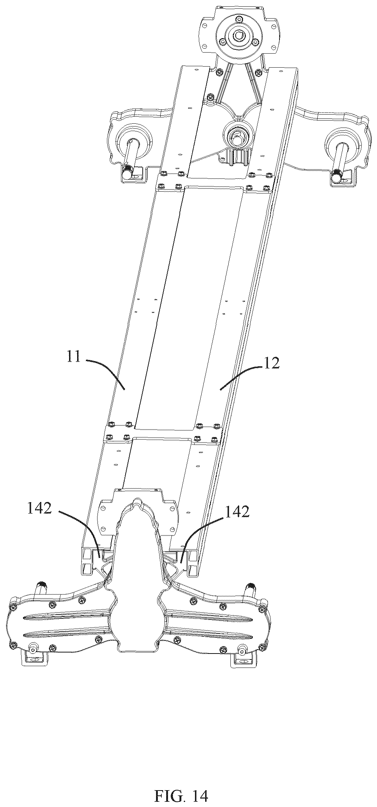

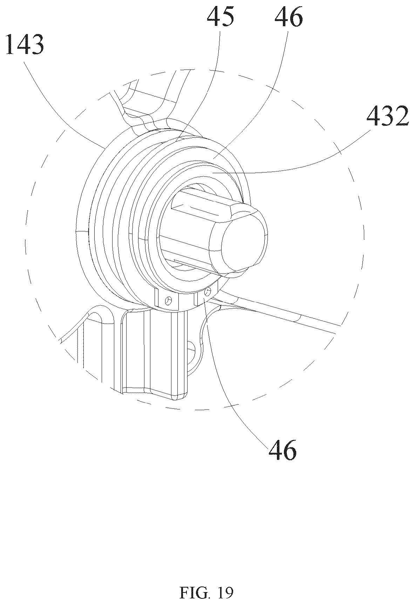

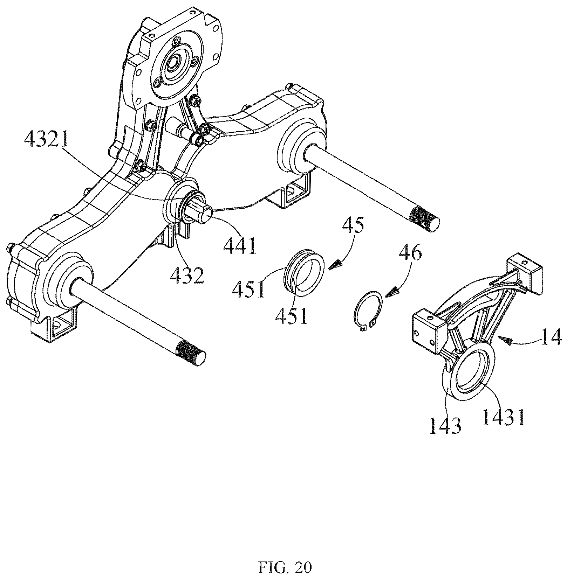

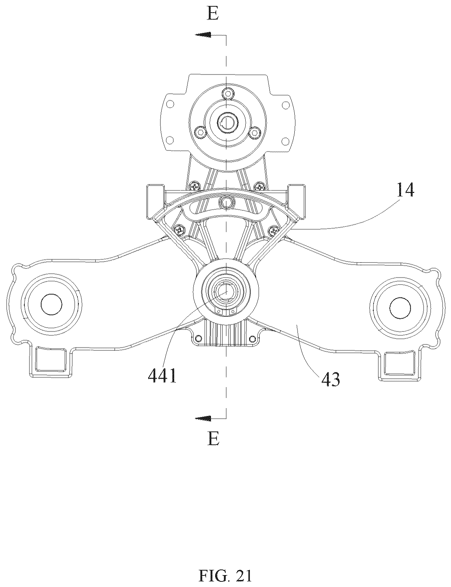

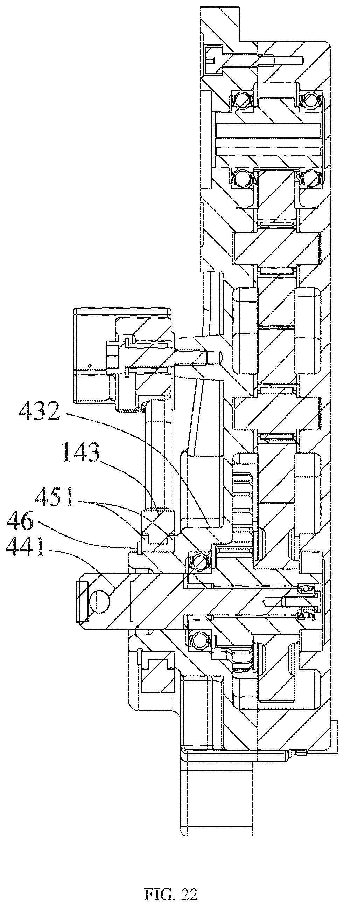

Referring to FIG. 1 to FIG. 24, the cleaning robot according to a first embodiment of the present application includes a rack 1, an outer shell 2, a first traveling wheel 3a, a first driving mechanism 4a for driving the first traveling wheel 3a to rotate, a second traveling wheel 3b, a second driving mechanism 4b for driving the second traveling wheel 3b to rotate, a control box 5, a battery box 6 and a roller brush 9. The first driving mechanism 4a and the second driving mechanism 4b are provided at two ends of the rack 1, respectively, in a length direction L. Both the first driving mechanism 4a and the second driving mechanism 4b are electrically connected to the control box 5. Specifically, the control box 5 includes a box body and a controller disposed in the box body. Both the first driving mechanism 4a and the second driving mechanism 4b are electrically connected to the controller. The opening and stopping of the first driving mechanism 4a and the second driving mechanism 4b are controlled by the controller.

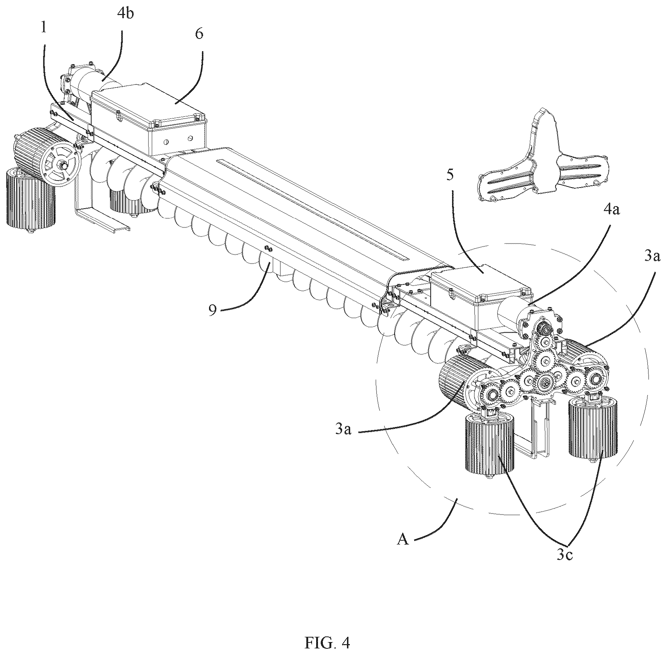

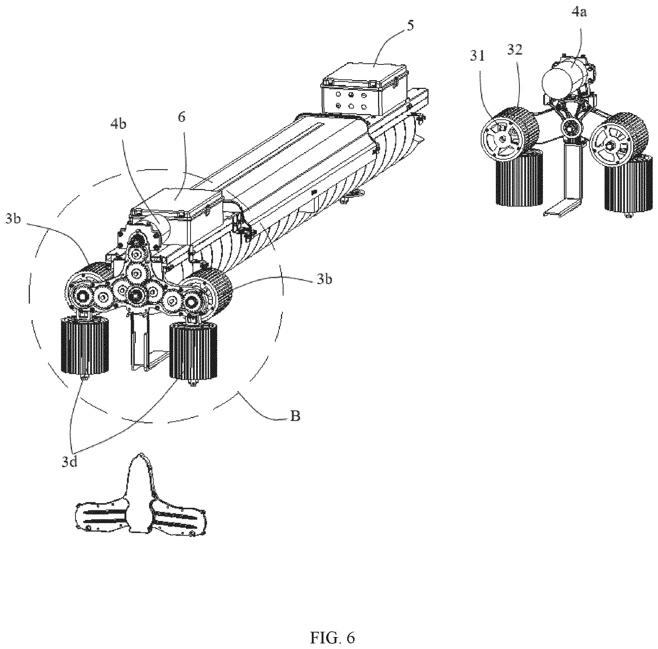

Referring to FIG. 4 and FIG. 6, the cleaning robot includes the roller brush 9, a first guiding wheel 3c and a second guiding wheel 3d. The second driving mechanism 4b drives the roller brush 9 to rotate so as to achieve cleaning. The first guiding wheel 3c is connected to the first driving mechanism 4a. The second guiding wheel 3d is connected to the second driving mechanism 4b.

The outer shell 2 is connected to the rack 1. The control box 5 and the battery box 6 are both connected to the rack 1. Moreover, the control box 5 and the battery box 6 are located in a space between the rack 1 and the outer shell 2. The battery box 6 is used to store a battery. The battery first stores electrical energy, and then the battery supplies power to the first driving mechanism 4a and the second driving mechanism 4b. The control box 5 is disposed adjacent to one of the first driving mechanism 4a and the second driving mechanism 4b, and the battery box 6 is disposed adjacent to a remaining one of the first driving mechanism 4a and the second driving mechanism 4b. The control box 5 and the battery box 6 do not increase the height of the cleaning robot, and the overall structure is more compact and takes up less space.

In the illustrated embodiment of the present application, referring to FIG. 4 and FIG. 6, the control box 5 is disposed adjacent to the first driving mechanism 4a. The battery box 6 is disposed adjacent to the second driving mechanism 4b. Moreover, along the length direction L of the rack 1, a distance between the control box 5 and the first driving mechanism 4a, and a distance between the battery box 6 and the second driving mechanism 4b are both smaller than a distance between the control box 5 and the battery box 6. That is to say, the control box 5 and the battery box 6 are respectively arranged adjacent to two ends of the rack 1 so that the weight of the cleaning robot is evenly distributed and a center of gravity is stable. The cleaning robot is not prone to deflection when moving, which is conducive to uniform stress on the photovoltaic module during cleaning and avoids damage caused by local pressure deformation of the photovoltaic module. In addition, the first driving mechanism 4a and the second driving mechanism 4b are respectively provided at two ends of the rack 1 along the length direction L. By arranging the control box 5 and the battery box 6 adjacent to two ends of the rack 1 respectively, the control box 5 and the battery box 6 can be supported and carried by the first driving mechanism 4a and the second driving mechanism 4b, and the rack 1 is not easily bent, or the rack 1 can be designed at low cost if the support bearing capacity is sufficient. Of course, in other embodiments, the control box 5 can also be disposed adjacent to the second driving mechanism 4b, and the battery box 6 can be disposed adjacent to the first driving mechanism 4a.

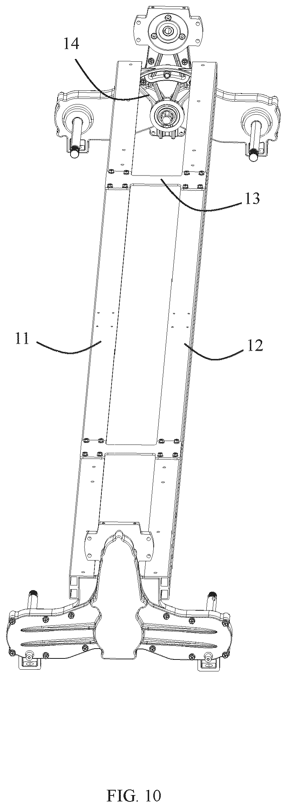

Referring to FIG. 10, the rack 1 includes a first cross beam 11, a second cross beam 12, a connecting plate 13 connecting the first cross beam 11 and the second cross beam 12, and a cantilever arm 14. The cantilever arm 14 is fixed to one end of the first cross beam 11 and the second cross beam 12. The first driving mechanism 4a is rotationally connected to the cantilever arm 14. Furthermore, a rotation axis of the first driving mechanism 4a extends along the length direction L of the rack 1. The cantilever arm 14 is rotationally connected to the first driving mechanism 4a, so that the first driving mechanism 4a is rotatable around a rotation fulcrum relative to the rack 1 so as to adapt to terrains of different heights. The second driving mechanism 4b is fixed to another end of the first cross beam 11 and the second cross beam 12.

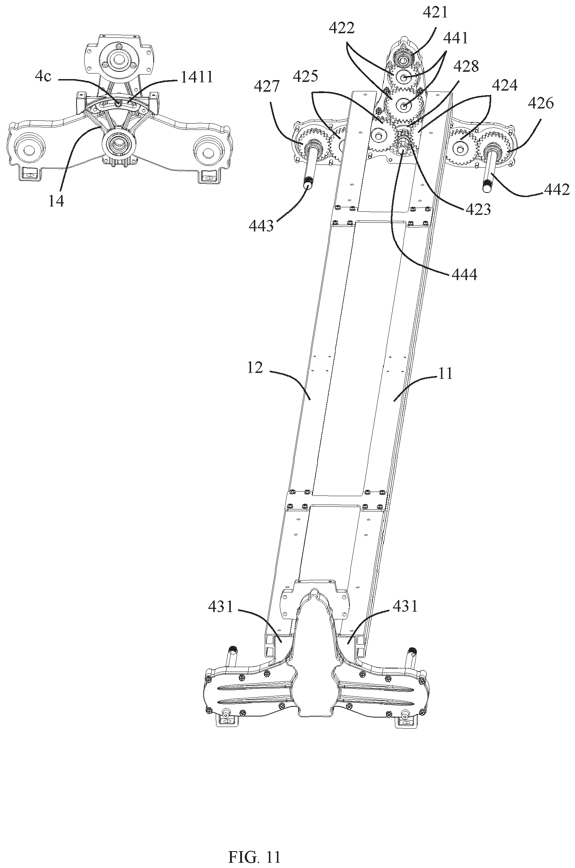

Referring to FIG. 11, the cantilever arm 14 defines a limiting groove 1411 which is an arc-shaped groove. The cleaning robot includes a limiting component 4c fixed to the first driving mechanism 4a. One end of the limiting component 4c away from the first driving mechanism 4a extends into the limiting groove 1411. The limiting component 4c rolls in the limiting groove 1411 along with the rotation of the first driving mechanism 4a to limit the rotation angle of the first driving mechanism 4a, so that the first driving mechanism 4a is in a safe rotation range to avoid overturning of the cleaning robot caused by an excessive angle. Besides, the first driving mechanism 4a improves the support stability through two rotational support points. The two support points are rotatable structures in order to reduce friction.

Regarding the positions of the limiting component 4c and the limiting groove 1411 in the first embodiment, the positions include the following forms: the limiting groove 1411 is provided on the cantilever arm 14 or the rack 1, and the limiting component 4c is provided on the first driving mechanism 4a; or, the limiting groove 1411 is provided on the first driving mechanism 4a, and the limiting component 4c is provided on the cantilever arm 14 or the rack 1.

When the cleaning robot walks normally on the photovoltaic module with the same tilt angle and height, the center of gravity of the cleaning robot is stable at the same height plane, and the first traveling wheel 3a and the second traveling wheel 3b move synchronously. At this time, the limiting component 4c is located in a middle area of the limiting groove 1411, and there is no relative rotation between the first driving mechanism 4a and the cantilever arm 14. When the cleaning robot passes through a bridge, if there is an angle difference between the bridge and the photovoltaic module, a height difference will occur between the first traveling wheel 3a at the front and the first traveling wheel 3a at the rear, causing the center of gravity of the cleaning robot to change. At this time, the first driving mechanism 4a rotates around the cantilever arm 14 under the action of its own gravity, and the limiting component 4c moves within the limiting groove 1411 to enable the cleaning robot to pass through the bridge smoothly. The second driving mechanism 4b does not rotate relative to the rack 1, so that the rack 1 is always parallel to the bridge, which is conducive to the cleaning robot passing through the bridge more stably.

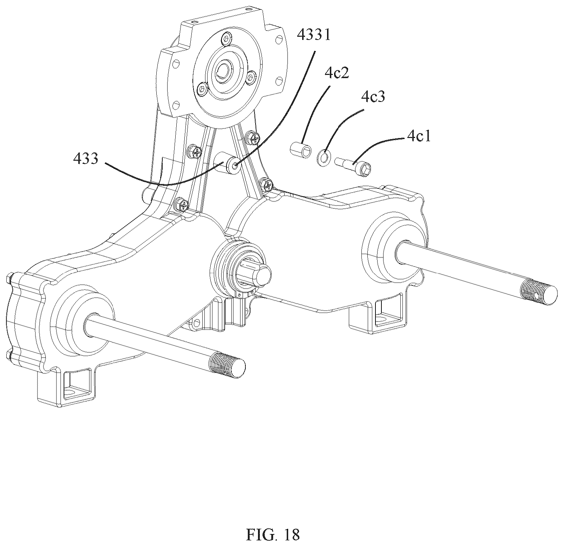

Referring to FIG. 18, the limiting component 4c includes a bolt 4c1, a sleeve 4c2 and a washer 4c3. The gear box 43 is provided with a positioning post 433 which defines a screw hole 4331. A thread section of the bolt 4c1 mates with the threads in the screw hole 4331, so that the bolt 4c1 is stably connected to the gear box 43. The sleeve 4c2 is sleeved on a smooth section of the bolt 4c1. The sleeve 4c2 is rotatable relative to the bolt 4c1. The sleeve 4c2 extends into the limiting groove 1411 of the cantilever arm 14. An outer wall of the sleeve 4c2 forms a line contact with a groove wall of the limiting groove 1411. When the gear box 43 rotates relative to the cantilever arm 14, the sleeve 4c2 rotates, and there is rolling friction between the sleeve 4c2 and the groove wall of the limiting groove 1411. Therefore, the sleeve 4c2 is beneficial to reducing friction, thereby reducing the amount of wear. The washer 4c3 is provided between a head of the bolt 4c1 and the sleeve 4c2. The head of the bolt 4c1 and the washer 4c3 are located outside the limiting groove 1411. The washer 4c3 reduces friction and at the same time plays a limiting role on the sleeve 4c2.

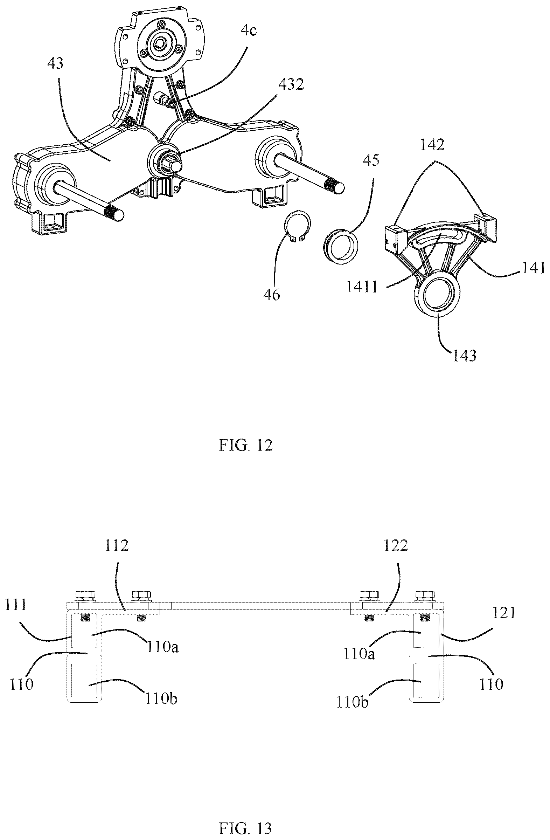

Referring to FIG. 12, the cantilever arm 14 includes a cantilever arm body 141, two first connecting blocks 142 connected to an upper end of the cantilever arm body 141, and a first annular portion 143 connected to a lower end of the cantilever arm body 141. The limiting groove 1411 is provided on the cantilever arm body 141. The cantilever arm 14 is fixedly connected to the first cross beam 11 and the second cross beam 12 through the two first connecting blocks 142.

The cantilever arm 14 is a sector-shaped structure that scatters from bottom to top, and is made of aluminum alloy. The limiting groove 1411 is located at an upper end of the sector-shaped structure. The first annular portion 143 is located at a lower end of the sector-shaped structure. The sector-shaped structure can facilitate the arrangement of the limiting groove 1411 above the first annular portion 143 in order to ensure the limitation of the swing angle.

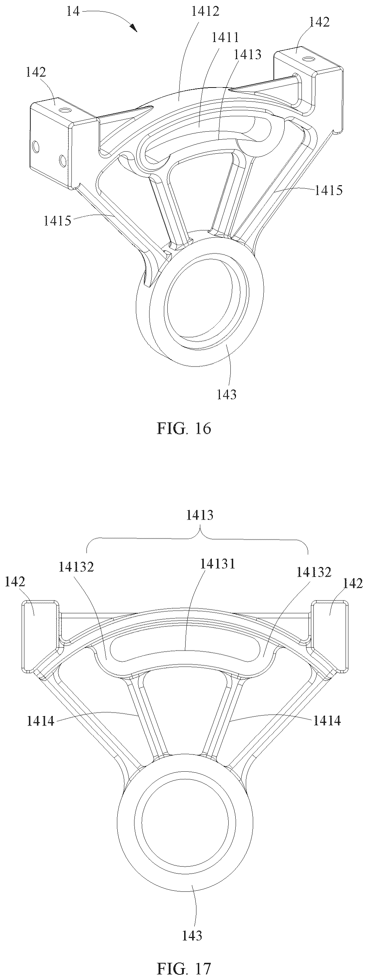

Referring to FIG. 16 and FIG. 17, a periphery of the limiting groove 1411 includes a section of arc-shaped wall 1412 and a section of U-shaped wall 1413. The cantilever arm body 141 includes two side portions 1415. The upper ends of the two side portions 1415 are connected by the arc-shaped wall 1412. The lower ends of the two side portions 1415 are connected to the first annular portion 143. The cantilever arm 14 is processed from aluminum alloy to form the sector-shaped structure as described above, which facilitates processing operations and ensures structural strength.

Referring to FIG. 17, the U-shaped wall 1413 includes a first connecting wall 14131 and two second connecting walls 14132 which are located at two ends of the first connecting wall 14131 and are arranged oppositely. An extension direction of the first connecting wall 14131 is consistent with the arc-shaped wall 1412, and an arc length of the first connecting wall 14131 is smaller than an arc length of the arc-shaped wall 1412. Opposite ends of the arc-shaped wall 1412 are respectively exposed from the two second connecting walls 14132 so as to be connected to the upper ends of the two side portions 1415. The two first connecting blocks 142 are respectively located at two connection positions between the opposite ends of the arc-shaped wall 1412 and the upper ends of the side portions 1415. Therefore, in the first embodiment, the cantilever arm 14 is fixed to the rack 1 through the two first connecting blocks 142.

Referring to FIG. 17, the cantilever arm 14 further includes two reinforcing arms 1414. A lower end of the reinforcing arm 1414 is connected to the first annular portion 143 and an upper end of the reinforcing arm 1414 is connected to the first connecting wall 14131. As the name suggests, the function of the reinforcing arm 1414 is to strengthen the sector-shaped structure.

In a second embodiment (not shown), the cantilever arm 14 is fixedly connected to the first driving mechanism 4a and rotationally connected to the rack 1. The rack 1 includes a connecting structure which is fixedly connected to the rack 1 and rotatably connected to the cantilever arm 14. The cleaning robot also includes the limiting component 4c and the limiting groove 1411. The limiting component 4c extends into the limiting groove 1411 and is rotatable relative to the limiting groove 1411. Regarding the positions of the limiting component 4c and the limiting groove 1411 in the second embodiment, the positions include the following forms: the limiting component 4c is provided on the rack 1, and the limiting groove 1411 is provided on the cantilever arm 14 or the first driving mechanism 4a; or, the limiting component 4c is provided on the cantilever arm 14 or the first driving mechanism 4a, and the limiting groove 1411 is provided on the rack 1.

The difference between the second embodiment and the first embodiment lies in that the position of the limiting component 4c and the limiting groove 1411 is different. In the second embodiment, the limiting component 4c is located on the cantilever arm 14 and is fixedly connected to the rack 1. The limiting groove 1411 is provided on the side wall of the gear box 43. The cantilever arm 14 and the gear box 43 are rotatably connected, that is, in the second embodiment, the limiting groove 1411 in the first embodiment is changed into a fixed connection with the gear box 43. By separating the limiting component 4c from the gear box 43 in the first embodiment and changing it to a rotational connection, the same effect as in the first embodiment of the first driving mechanism 4a rotating around the cantilever arm 14 under the action of its own weight can also be achieved. It should be noted that in other embodiments, the cantilever arm 14 and the gear box 43 can also be fixedly connected. The limiting groove 1411 is provided on the cantilever arm 14. The limiting component 4c is fixedly connected to the rack 1 through a connecting structure. The connecting structure is fixedly connected to the limiting component 4c and at the same time rotationally connected to the cantilever arm 14 or the gear box 43, so that the same technical effect can be achieved. It can be understood that there are many ways to implement the connection structure and its connection position with the rack 1, which will not be described again here.

In summary, no matter in the first embodiment or the second embodiment, the cantilever arm 14 is provided between the rack 1 and the first driving mechanism 4a. One end of the cantilever arm 14 is fixedly connected to one of the rack 1 and the first driving mechanism 4a, and the other end of the cantilever arm 14 is rotatably connected to a remaining one of the first driving mechanism 4a and the rack 1. In the above two embodiments of the present application, the cantilever arm 14 is provided at one end of the rack 1 to realize a relatively rotatable connection between the first traveling wheel 3a and the rack 1, and the second traveling wheel 3b at the other end is fixedly connected to the rack 1. That is to say, the traveling wheels 3a, 3b on two sides can achieve relative twisting, so that the present application uses the first traveling wheel 3a to adapt to the twisted path, thereby improving the climbing ability and cleaning reliability.

Referring to FIG. 1, FIG. 11 and FIG. 12, the cleaning robot of this application includes the roller brush 9. Each of the first driving mechanism 4a and the second driving mechanism 4b has a first output end wheel shaft 444. Two ends of the roller brush 9 are correspondingly connected to the first output end wheel shaft 444 of the first driving mechanism 4a and the first output end wheel shaft 444 of the second driving mechanism 4b. The first output end wheel shaft 444 of the first driving mechanism 4a passes through and extends out of the second annular portion 432 of the gear box 43. The first output end wheel shaft 444 of the second driving mechanism 4b extends out of the gear box 43.

Specifically, referring to FIG. 13, the first cross beam 11 includes a first cross beam main body 111 and a first extension portion 112 connected to the first cross beam main body 111. The second cross beam 12 includes a second cross beam main body 121 and a second extension portion 122 connected to the second cross beam main body 121. The first cross beam main body 111 and the second cross beam main body 121 both have cavities for cables to pass through. The cavity includes a first cavity 110a and a second cavity 110b. There is a partition plate 110 between the first cavity 110a and the second cavity 110b. The partition plate 110 is a horizontal plate. Therefore, the first cavity 110a and the second cavity 110b are distributed up and down. The partition plate 110 can enhance the support strength of the rack 1. The first extension portion 112 and the second extension portion 122 are arranged oppositely. The first extension portion 112 extends from the first cross beam main body 111 in a direction adjacent to the second cross beam 12. The second extension portion 122 extends from the second cross beam main body 121 in a direction adjacent to the first beam 1. Both the first cross beam main body 111 and the second cross beam main body 121 support the control box 5 and the battery box 6. The first extension portion 112 and the second extension portion 122 can also support the control box 5 and the battery box 6. The control box 5 and the battery box 6 are provided on the first extension portion 112 and the second extension portion 122, and are fixedly connected to the first extension portion 112 and the second extension portion 122. The first extension portion 112 and the second extension portion 122 are configured to improve the bending and torsion resistance of the rack 1.

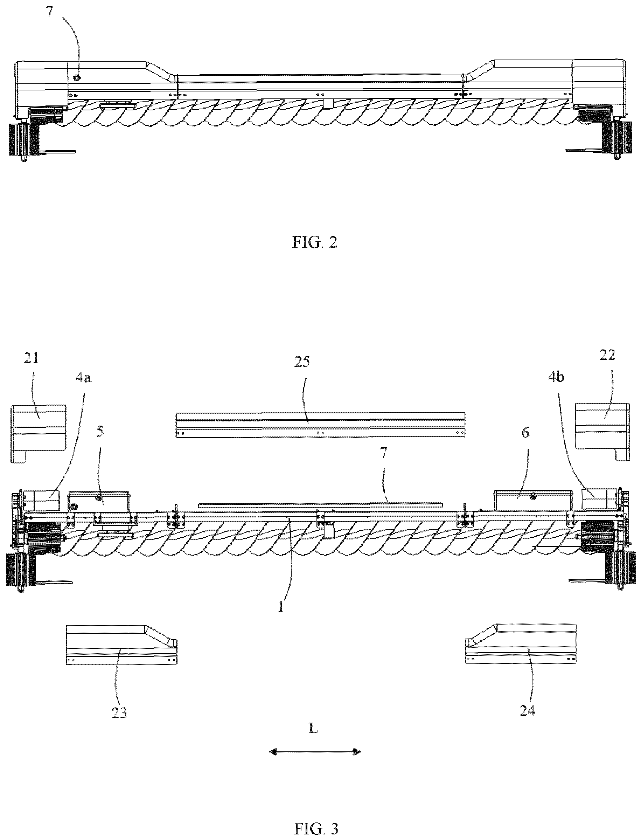

In some embodiments, referring to FIG. 3, the outer shell 2 includes a first shell 21, a second shell 22, a third shell 23, a fourth shell 24 and a fifth shell 25. The first shell 21 is disposed adjacent to the third shell 23. The second shell 22 is disposed adjacent to the fourth shell 24. The fifth shell 25 connects the third shell 23 and the fourth shell 24. The first shell 21 covers the first driving mechanism 4a and rotates synchronously with the first driving mechanism 4a. The second shell 22 covers the second driving mechanism 4b. The third shell 23 covers the control box 5. The fourth shell 24 covers the battery box 6. That is, the outer shell 2 adopts a segmented structure. When the cleaning robot needs maintenance, there is no need to disassemble the entire outer shell 2, only the corresponding part of the outer shell 2 needs to be disassembled, which facilitates the maintenance. Of course, in other embodiments, the outer shell 2 includes the first shell 21, the second shell 22, the third shell 23 and the fourth shell 24. The third shell 23 is connected to the fourth shell 24.

Specifically, the fifth shell 25 is a middle shell. There is a first height between a top surface of the third shell 23 and a top surface of the rack 1. There is a second height between a top surface of the fourth shell 24 and a top surface of the rack 1. There is a third height between a top surface of the fifth shell 25 and the top surface of the rack 1. The first height is equal to the second height. The second height is greater than the third height. That is, the middle shell is lower than the first shell 21, the second shell 22, the third shell 23 and the fourth shell 24 on both sides. Lowering the height of the middle part of the cleaning robot reduces the center of gravity of the cleaning robot and reduces the impact of windy environments on the cleaning robot. The entire shell has a structure with high sides and a low center, forming an airflow channel between the fifth shell 25 and the third shell 23. When the cleaning robot walks, the air pressure in the airflow channel is low. An airflow part on a front side of the cleaning robot will be sucked into the airflow channel and flow through the airflow channel, thereby reducing the wind resistance of the cleaning robot. The streamlined designs at the opposite ends of the fifth shell 25 and the third shell 23 are also more beautiful.

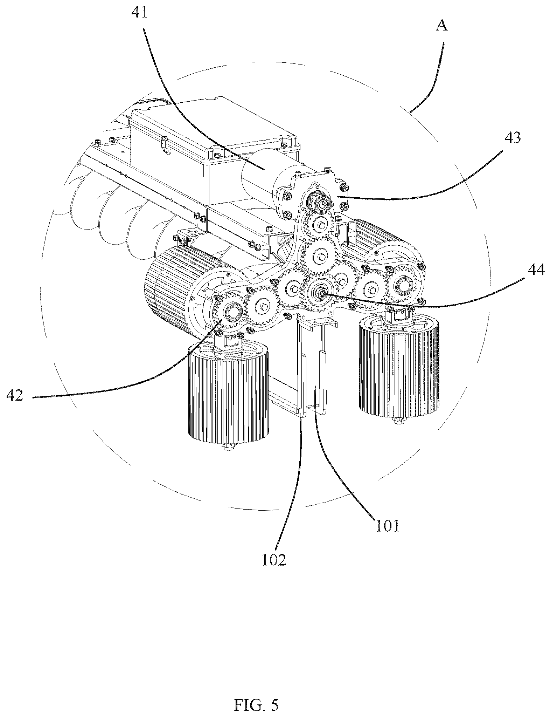

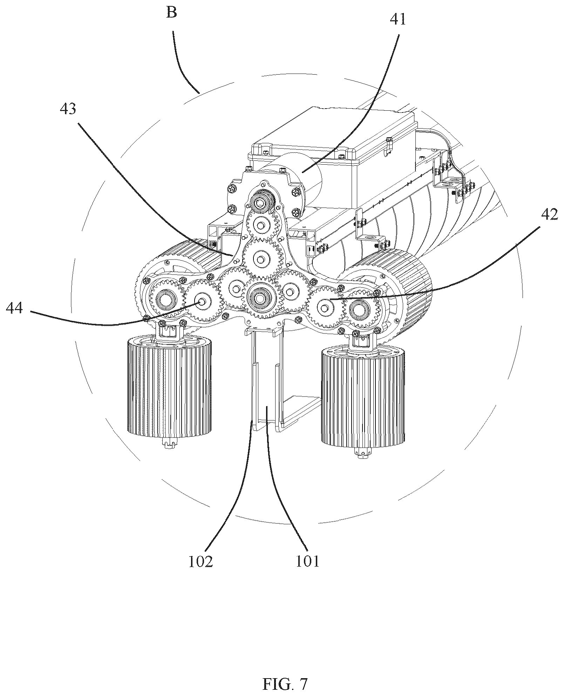

Referring to FIG. 5 and FIG. 7, the number of the first traveling wheels 3a and the second traveling wheels 3b is two, respectively. Each of the first driving mechanism 4a and the second driving mechanism 4b includes a driving component 41, a plurality of gears 42 and a gear box 43. The two gear boxes 43 of the first driving mechanism 4a and the second driving mechanism 4b are correspondingly connected to two ends of the rack 1 in the length direction L. The plurality of gears 42 are disposed in the gear box 43. The plurality of gears 42 are rotatably connected to the gear box 43 through a wheel shaft 44 , and one of the gears 42 is connected to an output shaft of the driving component 41. The first traveling wheel 3a is connected to the wheel shaft 44 of the first driving mechanism 4a. The second traveling wheel 3b is connected to the wheel shaft 44 of the second driving mechanism 4b. The plurality of gears 42 engage in meshing transmission to transmit power to rotate the first traveling wheels 3a and the second traveling wheels 3b. Two ends of the roller brush 9 are correspondingly connected to the wheel shaft 44 of the first driving mechanism 4a and the wheel shaft 44 of the second driving mechanism 4b. The roller brush 9, the first traveling wheel 3a and the second traveling wheel 3b are connected to different wheel shafts 44. The second driving mechanism 4b is an active driving mechanism. That is, the driving component 41 of the second driving mechanism 4b drives the plurality of gears 42 in the second driving mechanism 4b to rotate, so as to drive the second traveling wheel 3b and the roller brush 9 to rotate simultaneously. The first driving mechanism 4a is a driven driving mechanism. That is, the driving component 41 of the first driving mechanism 4a drives the plurality of gears 42 in the first driving mechanism 4a to rotate, so as to drive the first traveling wheel 3a to rotate.

The first guiding wheel 3c is connected to the gear box 43 of the first driving mechanism 4a. The second guiding wheel 3d is connected to the gear box 43 of the second driving mechanism 4b. Referring to FIG. 6, each of the first traveling wheel 3a, the second traveling wheel 3b, the first guiding wheel 3c and the second guiding wheel 3d includes a hub 31 and a rubber tire 32 sleeved outside the hub 31. At least part of a contour of the rubber tire 32 of the first traveling wheel 3a and the second traveling wheel 3b is tapered. That is, at least part of an outer diameter of the rubber tire 32 of the first traveling wheel 3a and the second traveling wheel 3b gradually decreases outward from the gear box 43. In this way, the first traveling wheel 3a and the second traveling wheel 3b can be prevented from contacting a glass panel outside a frame of the photovoltaic module during the cleaning process, resulting in crushing of the photovoltaic module.

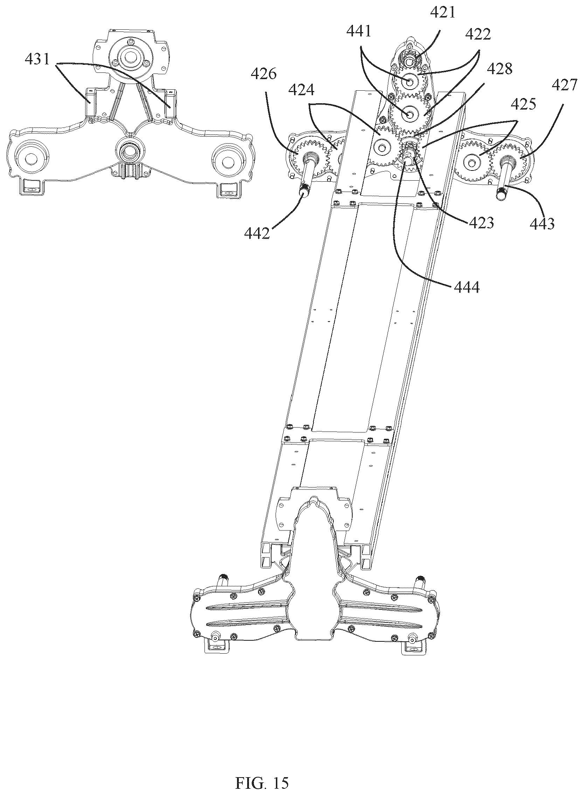

The driving component 41 adopts a motor. The motor of the first driving mechanism 4a and the limiting component 4c are connected to a same side of the gear box 43. The gear box 43 of the first driving mechanism 4a is rotationally connected to the cantilever arm 14. Referring to FIG. 15, the gear box 43 of the second driving mechanism 4b is provided with two second connecting blocks 431. The two second connecting blocks 431 are fixedly connected to the first cross beam 11 and the second cross beam 12 correspondingly.

Referring to FIG. 12, the gear box 43 of the first driving mechanism 4a is provided with a second annular portion 432. The first annular portion 143 of the cantilever arm 14 is provided outside the second annular portion 432. Besides, a bearing 45 is provided between the first annular portion 143 and the second annular portion 432 to achieve a rotatable connection between the first annular portion 143 and the second annular portion 432. The first driving mechanism 4a further includes an elastic piece 46. The elastic piece 46 is resisted between the second annular portion 432 and the bearing 45 to provide limiting position for the bearing 45.

Specifically, referring to FIG. 12 and FIG. 19 to FIG. 22, two limiting portions 451 are provided at two ends of the bearing 45. Moreover, the limiting portion 451 at one end away from the gear box 43 of the first drive mechanism 4a is provided separately from the bearing 45, and the other limiting portion 451 is formed integrally with the bearing 45. There are limiting grooves 1431 for accommodating the limiting portions 451 on two sides of the first annular portion 143. The bearing 45 is first sleeved on an outside of the second annular portion 432, and then the first annular portion 143 is sleeved on an outside of the bearing 45. The limiting portion 451 integrated with the bearing 45 is provided in the limiting groove 1431 on one side of the first annular portion 143. Then, the limiting portion 451 that is disposed separately from the bearing 45 is provided in the limiting groove 1431 on the other side of the first annular portion 143. The elastic piece 46 abuts against the limiting portion 451 so as to stably limit the bearing 45 and the limiting portion 451 within the first annular portion 143, providing a limiting position for the bearing 45 and preventing the bearing 45 from falling off the second annular portion 432. An annular limiting groove 4321 is provided on an outer periphery of the second annular portion 432. The elastic piece 46 is clamped in the annular limiting groove 4321. The elastic piece 46 is provided with a positioning hole that matches an installation tool, so that the installation tool can easily grasp the elastic piece 46 when assembling or disassembling the elastic piece 46.

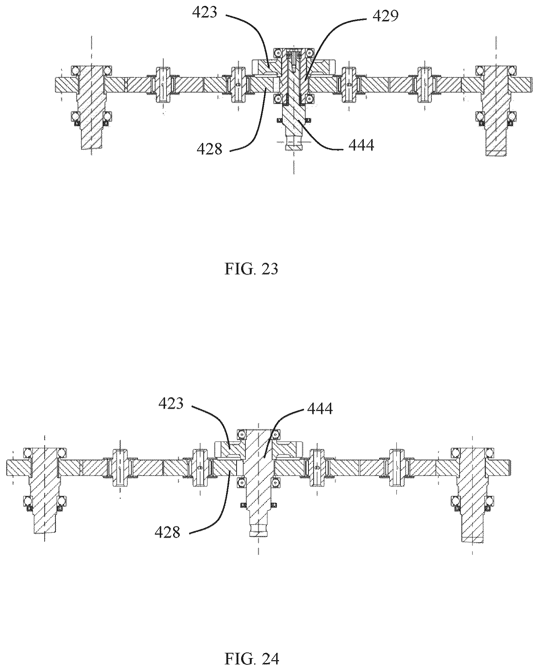

Referring to FIG. 11, FIG. 15 and FIG. 23, the plurality of gears 42 of the first driving mechanism 4a include a driving end gear 421, a first transmission gear 422, a first output end gear 423, a fourth output end gear 428, a second transmission gear 424, a third transmission gear 425, a second output end gear 426 and a third output end gear 427. The driving end gear 421 is sleeved on the output shaft of the driving component 41. The first transmission gear 422 is meshed with the driving end gear 421. Referring to FIG. 23, the first output end wheel shaft 444 is provided with a cylindrical component 429. The first output end gear 423 and the fourth output end gear 428 are jointly provided on the cylindrical component 429. The first output end wheel shaft 444 is fixedly connected to one end of the roller brush 9 so that the first output end wheel shaft 444 and the cylindrical component 429 rotate independently. The cylindrical component 429 is connected to both the first output end gear 423 and the fourth output end gear 428, so that the roller brush 9, the first output end gear 423 and the fourth output end gear 428 can rotate independently. The driving component 41 of the first driving mechanism 4a drives the plurality of gears 42 in the first driving mechanism 4a to rotate, thereby driving the first traveling wheel 3a to rotate.

The first transmission gear 422 is sleeved on a corresponding transmission shaft 441. The first transmission gear 422 meshes with the fourth output end gear 428. The fourth output end gear 428 is coaxially arranged with the first output end gear 423. The second transmission gear 424 and the third transmission gear 425 both mesh with the first output end gear 423. The second output end gear 426 meshes with the second transmission gear 424. The second output end gear 426 is sleeved on the second output end wheel shaft 442. The third output end gear 427 meshes with the third transmission gear 425. The third output end gear 427 is sleeved on the third output end wheel shaft 443. The driving component 41 drives the driving end gear 421 to rotate. The driving end gear 421 drives the first transmission gear 422 to rotate. The first transmission gear 422 drives the fourth output end gear 428 to rotate so that the first output end gear 423 rotates simultaneously. The first output end gear 423 drives the second transmission gear 424 and the third transmission gear 425 to rotate at the same time. The second transmission gear 424 drives the second output end gear 426 to rotate. The second output end gear 426 drives the second output end wheel shaft 442 to rotate. The third transmission gear 425 drives the third output end gear 427 to rotate. The third output end gear 427 drives the third output end wheel shaft 443 to rotate. The two first traveling wheels 3a of the cleaning robot are respectively connected to the second output end wheel shaft 442 and the third output end wheel shaft 443 of the first driving mechanism 4a. The two second traveling wheels 3b are respectively connected to the second output end wheel shaft 442 and the third output end wheel shaft 443 of the second driving mechanism 4b. That is, the second output end wheel shaft 442 and the third output end wheel shaft 443 are respectively connected to one of the two traveling wheels at the same end. The number of the first transmission gears 422, the second transmission gears 424 and the third transmission gears 425 may be two or three, respectively. One of the first transmission gears 422 meshes with the fourth output end gear 428, and another of first transmission gears 422 meshes with the driving end gear 421.

Referring to FIG. 24, the only difference between the second driving mechanism 4b and the first driving mechanism 4a is that the first output end wheel shaft 444 of the second driving mechanism 4b is not provided with the cylindrical component 429. The first output end gear 423 and the fourth output end gear 428 are fixedly mounted on the first output end wheel shaft 444 so that the first output end wheel shaft 444, the first output end gear 423 and the fourth output end gear 428 are rotatable simultaneously. The first output end wheel shaft 444 is connected to the other end of the roller brush 9. When the driving component 41 of the second driving mechanism 4b drives the plurality of gears 42 in the second driving mechanism 4b to rotate, the second traveling wheel 3b and the roller brush 9 can be driven to rotate simultaneously.

The first output end wheel shaft 444 of the first driving mechanism 4a passes through and extends out of the second annular portion 432 of the gear box 43. The first output end wheel shaft 444 of the second driving mechanism 4b extends out of the gear box 43. Two ends of the roller brush 9 are correspondingly connected to the first output end wheel shaft 444 of the first driving mechanism 4a and the first output end wheel shaft 444 of the second driving mechanism 4b. An axis of the first annular portion 143 of the cantilever arm 14, an axis of the second annular portion 432 and an axis of the first output end wheel shaft 444 coincide with each other. An axis of the roller brush 9 coincides with an rotation axis of the first driving mechanism 4a.

Connection holes for connecting with the roller brush 9 are respectively provided on the first output end wheel shaft 444 of the first driving mechanism 4a and the first output end wheel shaft 444 of the second driving mechanism 4b. Furthermore, any one of the connection holes is a waist-shaped hole, and a remaining one of the connection holes is a circular hole. During installation, pre-installation can be performed through the waist-shaped hole and one end of the roller brush 9. Specifically, one end of a bolt is passed through the waist-shaped hole and a circular bolt hole corresponding to the waist-shaped hole at one end of the roller brush 9, and then a nut is screwed without tightening the nut. Then, another bolt is passed through a circular bolt hole on the first output end wheel shaft 444 of another driving mechanism and a corresponding circular bolt hole on the other end of the roller brush 9, and then tighten the nut. Finally, tighten the nut at the waist-shaped hole. The advantage of such an arrangement is that the installation position of the roller brush 9 can be easily adjusted to avoid improper installation due to manufacturing or installation errors.

Each of the first driving mechanism 4a and the second driving mechanism 4b is connected to a positioning structure 10. Specifically, referring to FIG. 1, the two gear boxes 43 are connected with the positioning structures 10. The positioning structures 10 are located on a side of the roller brush 9 away from the rack 1. Referring to FIG. 5 and FIG. 7, each positioning structure 10 includes an L-shaped positioning portion 101. The two positioning portions 101 are arranged oppositely. The positioning portions 101 are used to limit a parking position of the cleaning robot. An L-shaped reinforcing rib 102 is provided on a side of the positioning portion 101 facing away from the rack 1 in order to increase the structural strength of the positioning structure 10. The positioning structure 10 is used in conjunction with a docking station to realize the up and down, left and right limit of the cleaning robot.

Referring to FIG. 1 and FIG. 2, the cleaning robot includes an indicator light 7 which is provided on the outer shell 2. The indicator light 7 is used for status indication and alarm indication. For example, when the cleaning robot is working, the indicator light 7 is switched on. When the cleaning robot is parked, indicator light 7 is switched off. When the cleaning robot has a malfunction, the indicator light 7 flashes to alarm. Specifically, the indicator light 7 includes a strip light and a circular light. The strip light is provided on the fifth shell 25. The circular light is provided on the third shell 23 or the fourth shell 24.

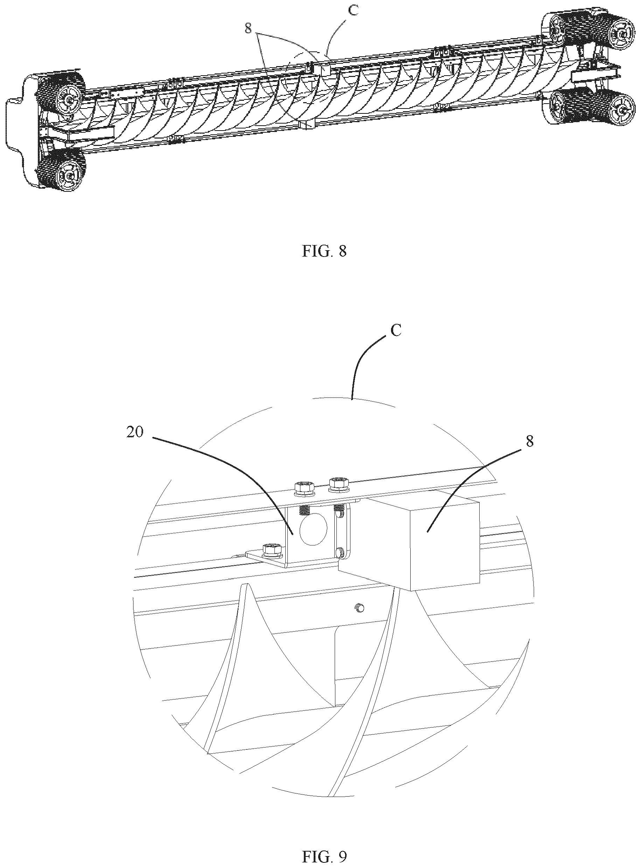

Referring to FIG. 8, the cleaning robot includes two displacement sensors 8 which are disposed correspondingly on two sides of the rack 1 in a width direction. The displacement sensors 8 are used to detect a distance between the cleaning robot and the docking station, and determine whether the cleaning robot is parked in place based on the distance detected.

Referring to FIG. 9, the cleaning robot includes a connection base 20. The connection base 20 is connected to the rack 1 and the fifth shell 25 at the same time. The displacement sensors 8 are fixed on the connection base 20.

The above embodiments are only used to illustrate the present application and do not limit the technical solutions described in the present application. The understanding of this description should be based on those skilled in the art. Although the present application has been described in detail with reference to the above-mentioned embodiments, it is understandable to those skilled in the art that those skilled in the art can still make modifications or equivalent substitutions to the present application. All technical solutions and improvements that do not depart from the spirit and scope of the present application shall be covered by the claims of the present application.

## Claims

1. A cleaning robot, **characterized by** comprising:
a rack (1);
a first traveling wheel (3a);
a second traveling wheel (3b);
a first driving mechanism (4a), the first driving mechanism (4a) being configured to drive the first traveling wheel (3a) to rotate;
a second driving mechanism (4b), the second driving mechanism (4b) being configured to drive the second traveling wheel (3b) to rotate; the first driving mechanism (4a) and the second driving mechanism (4b) being correspondingly arranged at two ends in a length direction (L) of the rack (1);
a control box (5), the control box (5) being electrically connected to both the first driving mechanism (4a) and the second driving mechanism (4b); and
a battery box (6), both the battery box (6) and the control box (5) being connected to the rack (1); the control box (5) being disposed adjacent to one of the first driving mechanism (4a) and the second driving mechanism (4b); the battery box (6) being disposed adjacent to a remaining one of the first driving mechanism (4a) and the second driving mechanism (4b).

2. The cleaning robot according to claim 1, wherein the cleaning robot comprises an outer shell (2) connected to the rack (1); the outer shell (2) comprises a first shell (21), a second shell (22), a third shell (23) and a fourth shell (24); the first shell (21) is disposed adjacent to the third shell (23); the second shell (22) is disposed adjacent to the fourth shell (24); the first shell (21) covers the first driving mechanism (4a); the second shell (22) covers the second driving mechanism (4b); the third shell (23) covers the control box (5); and the fourth shell (24) covers the battery box (6).

3. The cleaning robot according to claim 2, wherein the outer shell (2) comprises a fifth shell (25), the fifth shell (25) connects the third shell (23) and the fourth shell (24); a first height is formed between a top surface of the third shell (23) and a top surface of the rack (1); a second height is formed between a top surface of the fourth shell (24) and the top surface of the rack (1); a third height is formed between a top surface of the fifth shell (25) and the top surface of the rack (1); the first height is equal to the second height, the second height is greater than the third height; an indicator light (7) is provided on the outer shell (2).

4. The cleaning robot according to claim 1, wherein the rack (1) comprises a first cross beam (11) and a second cross beam (12), the first cross beam (11) comprises a first cross beam main body (111) and a first extension portion (112) connected to the first cross beam main body (111); the second cross beam (12) comprises a second cross beam main body (121) and a second extension portion (122) connected to the second cross beam main body (121); the first cross beam main body (111) and the second cross beam main body (121) both have cavities for cables to pass through; the first extension portion (112) and the second extension portion (122) are arranged oppositely.

5. The cleaning robot according to claim 4, wherein the rack (1) comprises a connecting plate (13) connecting the first cross beam (11) and the second cross beam (12); the cavity comprises a first cavity (110a) and a second cavity (110b); a partition plate (110) is provided between the first cavity (110a) and the second cavity (110b).

6. The cleaning robot according to claim 1, wherein the cleaning robot comprises two displacement sensors (8) which are correspondingly arranged on two sides of the rack (1) in a width direction; the two displacement sensors (8) are configured to detect a distance between the cleaning robot and a docking station, and determine whether the cleaning robot is parked in place according to the distance which is detected.

7. The cleaning robot according to claim 4, wherein two first traveling wheels (3a) and two second traveling wheels (3b) are provided, respectively; each of the first driving mechanism (4a) and the second driving mechanism (4b) comprises a driving component (41), a plurality of gears (42) and a gear box (43); the gear box (43) of the first driving mechanism (4a) and the gear box (43) of the second driving mechanism (4b) are correspondingly connected to the two ends of the rack (1) in the length direction (L); the plurality of the gears (42) are disposed in the gear box (43); the gears (42) are rotatably connected to the gear box (43); one of the gears (42) is connected to an output shaft of the driving component (41); a second output end wheel shaft (442) and a third output end wheel shaft (443) are provided in each of the gear box (43) of the first driving mechanism (4a) and the gear box (43) of the second driving mechanism (4b); the second output end wheel shaft (442) and the third output end wheel shaft (443) are respectively connected to the two first traveling wheels (3a) at a same end or the two second traveling wheels (3b) at a same end; the gears (42) engage in meshing transmission to transmit power to rotate the first traveling wheels (3a) and the second traveling wheels (3b); at least part of an outer contour of the first traveling wheel (3a) and the second traveling wheel (3b) is tapered.

8. The cleaning robot according to claim 1, wherein each of the first driving mechanism (4a) and the second driving mechanism (4b) is connected to a positioning structure (10); the positioning structure (10) comprises an L-shaped positioning portion (101); the positioning portion (101) of the first driving mechanism (4a) and the positioning portion (101) of the second driving mechanism (4b) are disposed oppositely; an L-shaped reinforcing rib (102) is provided on a side of the positioning portion (101) facing away from the rack (1); the positioning portion (101) is configured to limit a parking position of the cleaning robot.

9. The cleaning robot according to claim 1, wherein the rack (1) further comprises a cantilever arm (14) fixed to one end of the first cross beam (11) and the second cross beam (12); the first driving mechanism (4a) is rotationally connected to the cantilever arm (14); the second driving mechanism (4b) is fixed to another end of the first cross beam (11) and the second cross beam (12).

10. The cleaning robot according to claim 7, wherein the cleaning robot comprises a roller brush (9); two ends of the roller brush (9) are connected to a first output end wheel shaft (444) of the first driving mechanism (4a) and a first output end wheel shaft (444) of the second driving mechanism (4b); connection holes for connecting with the roller brush (9) are respectively provided on the first output end wheel shafts (444) of the first driving mechanism (4a) and the second driving mechanism (4b), and any one of the connection holes is a waist-shaped hole;
the cleaning robot comprises a first guiding wheel (3c) and a second guiding wheel (3d); the first guiding wheel (3c) is connected to the first driving mechanism (4a); and the second guiding wheel (3d) is connected to the second driving mechanism (4b).
